# EUROPEAN PATENT APPLICATION

(11) **EP 1 748 156 A2**
(43) Date of publication of application: **31.01.2007**
(21) Application number: 06117896.8
(22) Date of filing: 26.07.2006
(51) Int. Cl.: F01D 11/02, F03G 7/04

(54) **Sealing of a shaft of a geothermal steam turbine**

(30) Priority: 26.07.2005 IT TO20050520
(71) Applicant: ANSALDO ENERGIA S.P.A., 16152 Genova (IT)
(72) Inventor: BRUZZONE, Marco, 16157, GENOVA (IT)
(74) Representative: Jorio, Paolo

(57) **Abstract**

A geothermal steam turbine (11) has a casing (17) housing a succession of stages (15) and having a sleeve (26) through which projects an end portion (25) of a rotary shaft; and a sealing device (28) is provided between the sleeve (26) of the casing (17) and the end portion (25) of the shaft to prevent outside air from entering the turbine by means of a zero-clearance seal (29, 35, 38).

## Description

The present invention relates to a geothermal steam turbine for an electric power generating system.

In a so-called "geothermal" system, the steam turbine is supplied with endogenous steam, which is drawn directly from geothermal wells, flows through the various turbine stages, and is conducted from the last stage to a condenser.

The fixed and movable blades of the various stages are enclosed in one or more casings to keep the steam in and ensure it flows through the stages to generate power.

The ends of the rotor blade shaft, however, project from the casing to drive an electric power generator on one side and, on the other, regulating members and a compressor for extracting noncondensable gas from the endogenous steam.

Where the ends of the shaft project from the casing must be fitted with sealing devices to prevent pressurized steam leakage from the turbine into the atmosphere, thus resulting in power loss, or to prevent outside air from entering the vacuum sections of the turbine.

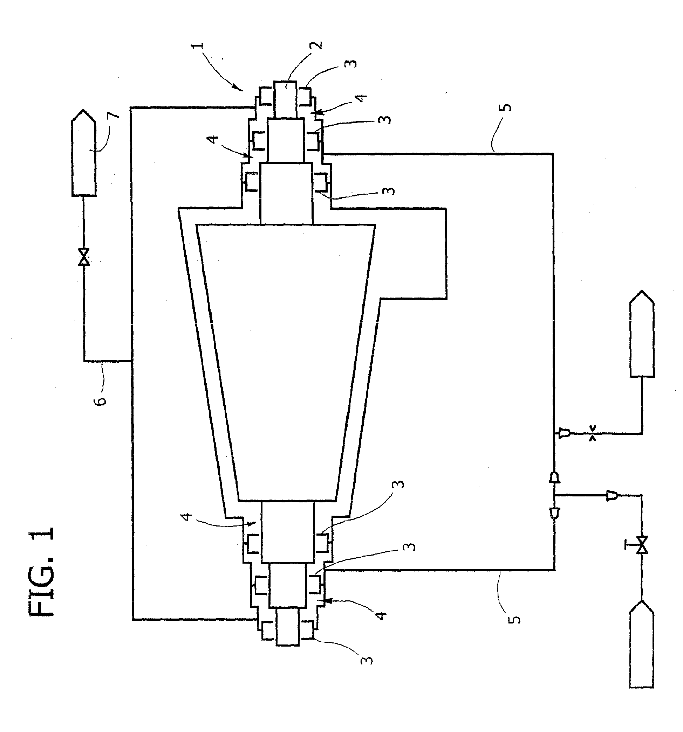

In Figure 1, which shows schematically a conventional known turbine 1 not employing geothermal steam, the ends of the shaft 2 are steam sealed using a number of circular sectors 3 defining two annular chambers 4. These communicate respectively with a sealing steam feed line 5 (at roughly 1.03 to 1.3 bar pressure) and an extraction line 6 (at roughly 0.98 bar pressure) connected to a condenser 7. A stream of sealing steam is thus formed between chambers 4 to prevent steam leakage and/or outside air from entering at the ends of shaft 2.

More specifically, escape of the sealing steam from the seal area is substantially prevented by depressurization of line 6, along which the sealing steam and air are extracted.

In a geothermal turbine, on the other hand, sealing devices of the above type are unsuitable for use at the last-stage, i.e. condenser-side, end of the shaft, on account of the nature of endogenous steam, which, being generated by a geothermal source (e.g. magma), contains corrosive components, such as hydrogen sulphide, calcium and silicon oxides, sand, iron oxide, etc.

When the expanding steam encounters the saturation line, the extremely hygroscopic salts in the steam capture the water formed and so collect into a mass. When aggregation of the salts, which are extremely hard, occurs between fixed and movable parts, the clearance between the parts is first reduced and eventually eliminated, and continuing deposits eventually damage the turbine components, particularly the rotor.

In other words, using geothermal sealing steam to prevent outside air from entering the turbine, the salts in the sealing steam accumulate, as described above, inside the sleeve defining the sealing area at the end of the shaft, and produce deposits resulting in serious damage to the rotor and fixed component parts. The deposits in fact act like turning "tools" which cut into the component parts of the machine facing the surfaces on which the deposits are formed, thus resulting in damage capable of impairing the efficiency of the sleeve.

In "geothermal" turbines, the ends of the shaft are therefore normally sealed using sealing devices involving no sealing steam, to prevent air entering the turbine.

Known geothermal turbines only employ labyrinth sealing devices, along which the air is forced to flow.

Eliminating the sealing steam reduces the efficiency of the sealing device, so that a certain amount of outside air enters the turbine and must be extracted by the compressor, together with the noncondensable gases.

The known labyrinth solution is unsatisfactory by requiring a more powerful compressor to extract the outside air as well, thus reducing the net electric power produced by the system.

Moreover, the outside air at geothermal sites is of such a nature as to corrode the movable parts of the turbine, albeit it after a certain length of time, and particularly the rotor blade disk of the last stage directly facing the end sleeve of the seal area, through which the air flows in.

This type of corrosion endangers the structural safety of the disk by producing so-called "stress corrosion" cracks. More specifically, "stress corrosion" is caused by a simultaneous combination of severe mechanical stress on the disk and air inflow from the adjacent sleeve.

It is an object of the present invention to provide a geothermal steam turbine designed to provide a straightforward, low-cost solution to the aforementioned problems.

According to the present invention, there is provided a geothermal steam turbine comprising:
- at least one fixed casing housing a succession of stages;
- a rotary shaft comprising an end portion projecting through an end portion of said casing;
- sealing means between said casing and said end portion of the shaft, to prevent outside air from entering the turbine;
characterized in that said sealing means comprise at least one zero-clearance seal.

A non-limiting embodiment of the invention will be described by way of example with reference to the accompanying drawings, in which:
Figure 1 shows, schematically, a conventional known turbine not employing geothermal steam;
Figure 2 shows, schematically, a preferred embodiment of a geothermal steam turbine in accordance with the present invention;
Figure 3 shows a larger-scale cross section of an end sealing area of the Figure 2 turbine;
Figures 4 and 5 show respective variations of the Figure 3 sealing area.

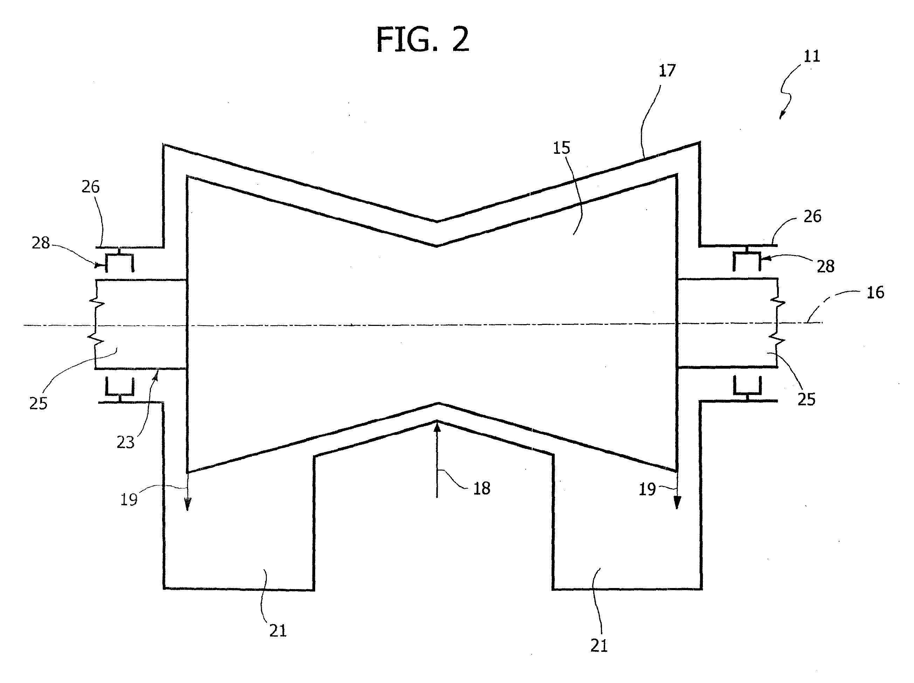

Number 11 in Figure 2 indicates a geothermal steam turbine (shown schematically) for an electric power generating system.

Turbine 11 comprises a succession of stages 15, each comprising a respective stator and a respective rotor.

Stages 15 are arranged along an axis 16 inside at least one fixed casing 17 having an inlet 18 for a stream of steam, which expands in stages 15 up to two opposite outlets 19, from which the expanded steam flows to respective condensers 21 (shown schematically).

The rotors of stages 15 are supported by a rotary shaft 23 (shown partly) comprising two end portions 25, which extend through respective end sleeves 26 of casing 17, each from a last stage (in the steam flow direction through stages 15). In other words, end portions 25 are adjacent to outlets 19, so that the space about portions 25 is subject to the depression generated in condensers 21.

Sealing devices 28 are interposed between sleeves 26 and portions 25 to prevent outside air from entering turbine 11.

According to the present invention, devices 28 comprise at least one "sliding" or "zero-clearance" seal 29, i.e. a seal comprising a mechanical member, which is carried by sleeve 26 or portion 25, cooperates in use in sliding manner with portion 25 or sleeve 26, and defines a physical barrier between the outside and inside environment to prevent air entering through sleeve 26.

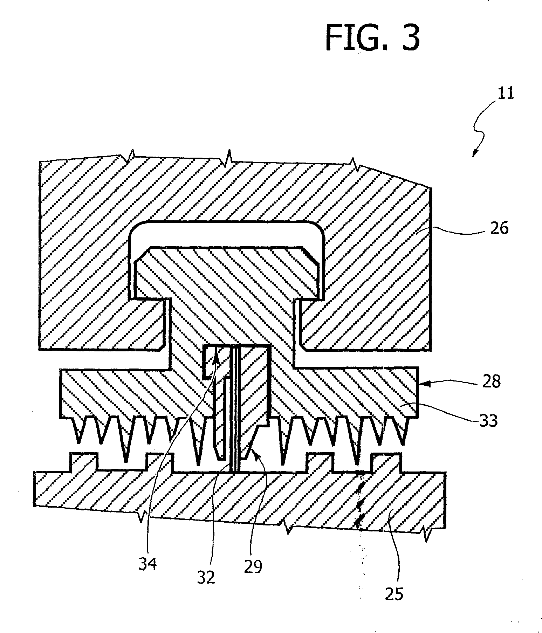

Seal 29 is preferably a brush seal comprising bristles 32, which are made of steel alloy, are preferably carried by the fixed sleeve 26, and slide directly on the rotating portion 25 to form a practically continuous airflow barrier (Figure 3).

More specifically, seal 29 is located in an intermediate axial portion of a labyrinth sealing sector 33. More specifically, device 28 is formed from a conventional labyrinth sealing sector, by forming a circumferential cavity 34 in which to house the support of bristles 32.

One seal 29 is preferably provided for each sleeve 26 to avoid dynamic instability of the rotors typical of series brush seal solutions.

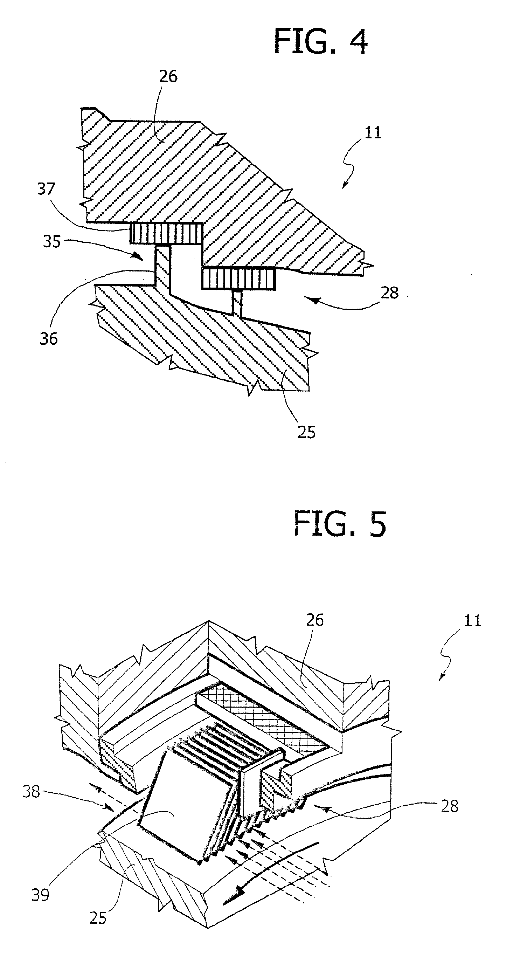

By way of an alternative to brush seals, so-called "abradable" seals 35 (Figure 4) may be used, i.e. in which the mechanical member defining the physical barrier (indicated 36) cooperates in sliding manner with a friction-consumable material 37. In the example shown, member 36 is carried by portion 25 of the shaft, but may be carried by sleeve 26.

The brush seals may also be replaced by "leaf" seals 38 (Figure 5) comprising a succession of leaves 39 performing the same barrier function as bristles 32.

For it to function, seal 29, 35, 38 in sleeve 26 needs no geothermal steam supply, and is therefore not subject to salt deposits. Moreover, seal 29, 35, 38 is extremely effective, by being so shaped as to allow practically no air in, thus solving the problem of corrosion of the last-stage rotor blade disk. Moreover, power absorption by the noncondensable gas extraction compressor (not shown) is lower than in labyrinth solutions, by virtue of substantially no air entering through sleeves 26, thus increasing the net power output of the electric power generating system.

Fitting seals 29, 35, 38 inside sleeve 26, i.e. on the discharge side, poses none of the usual overheating problems caused by sliding of the seal, thanks to the cooling action of the outside air on seal 29, 35, 38 and the relatively low temperature of shaft portion 25 on which the seal slides.

More specifically, the cooling action of the air is active throughout operation of turbine 11, even when the turbine is started up, in that, even at startup, seal 29, 35, 38 is subjected to nominal operating conditions (atmospheric pressure on one side, vacuum at condenser 21 on the other).

Clearly, changes may be made to turbine 11 as described herein without, however, departing from the protective scope of the present invention.

In particular, seal 29, 35, 38 may be used inside sleeve 26 in combination with other than a labyrinth seal and/or in combination with no other sealing systems.

## Claims

1. A geothermal steam turbine (11) comprising:
- at least one fixed casing (17) housing a succession of stages (15);
- a rotary shaft comprising an end portion (25) projecting through an end portion (26) of said casing (17);
- sealing means (28) between said casing (17) and said end portion (25) of the shaft, to prevent outside air from entering the turbine (11);
**characterized in that** said sealing means (28) comprise at least one zero-clearance seal (29; 35; 38).

2. A turbine as claimed in Claim 1, **characterized in that** said zero-clearance seal is defined by a brush seal (29).

3. A turbine as claimed in Claim 1, **characterized in that** said zero-clearance seal is defined by a leaf seal (38).

4. A turbine as claimed in Claim 1, **characterized in that** said zero-clearance seal is defined by an abradable seal (35).

5. A turbine as claimed in any one of the foregoing Claims, **characterized in that** said sealing means (28) comprise a single zero-clearance seal (29; 35; 38).

6. A turbine as claimed in any one of the foregoing Claims, **characterized in that** said zero-clearance seal is located in an intermediate portion of a labyrinth seal (33).
